# EUROPEAN PATENT SPECIFICATION

(11) **EP 4 662 407 B1**
(45) Date of publication and mention of the grant of the patent: **24.06.2026**
(21) Application number: 23813746.7
(22) Date of filing: 29.11.2023
(51) Int. Cl.: F03D 17/00

(54) **A WIND TURBINE WITH A CLEARANCE DETERMINATION DEVICE**
WINDTURBINE MIT EINER ABSTANDSBESTIMMUNGSVORRICHTUNG
ÉOLIENNE DOTÉE D'UN DISPOSITIF DE DÉTERMINATION DE JEU

(30) Priority: 13.03.2023 EP 23161378
(43) Date of publication of application: 17.12.2025
(73) Proprietor: Siemens Gamesa Renewable Energy A/S, 7330 Brande (DK)
(72) Inventor: STRUCK, Eirik, 24105 Kiel (DE); NIEUWENHUIZEN, Johannes Mathias Hubertus, 8700 Horsens (DK)
(74) Representative: SGRE-Association
(86) International application number: PCT/EP2023/083539
(87) International publication number: WO 2024/188488

(56) References cited:
- EP-A1- 3 922 840
- US-A1- 2010 021 298
- US-A1- 2016 215 763
- US-A1- 2022 179 045
- US-A1- 2022 195 992

## Description

### Field of invention

The present invention relates to a wind turbine comprising a clearance determination device. The invention also relates to a method of determining a distance between a tower and a blade of a wind turbine. Furthermore, the invention also relates to a use of a leaky feeder for determination of a distance between a tower and a blade of a wind turbine.

### Art Background

A leaky feeder ("radiating cable") is a cable or waveguide that is "leaky" in that it comprises slots in an outer conductor layer, so that electromagnetic signals leak in and/or out through said slots along the entire length of the leaky feeder. Accordingly, a leaky feeder can be especially interesting for applications, where signals should be transmitted/received along an extension, for example a tunnel, a mine, or a train.

Wind turbines can be considered as an important energy production source, and it can be expected that their importance and distribution will grow more and more. Accordingly, there is constant research and development undertaken to further improve the functionality of wind turbines. An important aspect in this regard may be the detection of the distance between a wind turbine tower and its blade in order to avoid that the blade hits the tower during operation.

Such a detection of the above-mentioned distance may be conventionally done by actively sending and/or receiving a signal. State of the art procedures are sending a signal with one antenna (electromagnetic wave) and receiving the signal with another one.

US 2022/179 045 A1 discloses an apparatus for detecting properties (e.g. a rotor blade distance from a tower) of a target object (e.g. a rotor blade) at a wind turbine. The apparatus comprises a leaky feeder arrangement comprising a plurality of parallel leaky feeders, a transmitter coupled to leaky feeder arrangement and configured to supply individual first radar signals to leaky feeders, a receiver coupled to the leaky feeder arrangement and configured to receive a second radar signals from the leaky feeders. Thereby, the second radar signal is reflected from the target object when the first radar signal beam hits the target object. The apparatus further comprises a processing unit configured to analyze the first and the second signals in order to determine the rotor blade distance.

### Summary of the Invention

There may be a need to determine a distance (clearance) between a tower and a blade of a wind turbine in an efficient and reliable manner. This need may be met by the subject matter according to the independent claims. Advantageous embodiments of the present invention are described by the dependent claims.

According to a first aspect of the invention, there is described a wind turbine comprising: a tower; a nacelle coupled to the tower; a wind rotor arranged at the nacelle, and comprising at least one blade (in particular at least three blades); and a clearance determination device to determine a distance between the tower and the at least one blade, the clearance measuring device comprising:
i) a transmitter (e.g. a transmitting unit and an antenna or leaky feeder) configured to transmit an (incident) electromagnetic signal,
ii) a receiver (e.g. a receiving unit and an antenna or leaky feeder) configured to directly receive the (incident) signal (i.e. reflection free) transmitted by the transmitter, and
iii) a processing unit (or processing device) configured to determine the distance based on the transmission (of the signal) and the direct reception of the (incident) electromagnetic signal.

Hereby, one of the transmitter and the receiver is arranged at the blade and the other one is arranged at the tower, and the transmitter and/or the receiver comprises a leaky feeder.

The transmitter and the receiver are also synchronized.

According to a second aspect of the invention, there is described a method of determining a distance between a tower and a blade of a wind turbine, the method comprising:
i) transmitting an electromagnetic signal;
ii) directly receiving the incident electromagnetic signal;
iii) determining the distance between the tower and the blade based on the transmitting and the direct receiving of the incident electromagnetic signal. Synchronizing the transmitter and the receiver.

Hereby, the transmitting and/or the receiving comprises a leaky feeder.

According to a third non claimed aspect of the invention, there is described a use (method of using) a leaky feeder as a transmitter and/or a receiver in order to determine a distance between a tower and a blade of a wind turbine based on an incident electromagnetic signal (in a reflection-free manner).

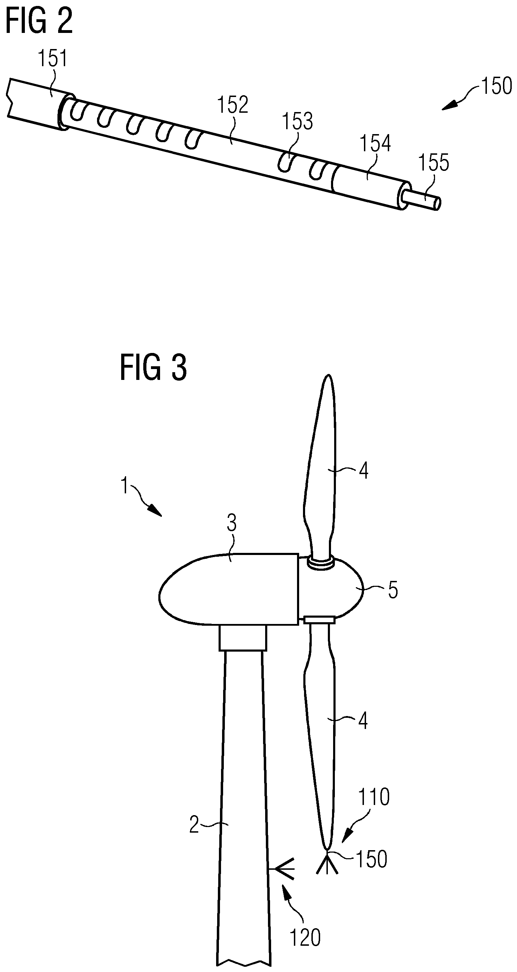

In the context of the present document, the term "leaky feeder" may in particular refer to an elongated structure that is configured as a transmitter and/or receiver of electromagnetic waves/signals, wherein the transmission/reception occurs at specifically defined slots/apertures (leaking). An exemplary embodiment of a leaky feeder is shown in Figure 2. The leaky feeder may be configured e.g. as a leaky coaxial cable, a leaky waveguide (in particular suitable at high frequencies), or a leaky stripline. Based on cables, leaky feeders may be flexible and robust against environmental conditions. The leaky feeder must be terminated to ground or metal structure.

In an embodiment, the leaky feeder comprises a plurality of slots to allow an electromagnetic signal to leak out (radiate) of the leaky feeder along its (entire) length. In a further embodiment, the leaky feeder comprises a plurality of slots to allow an electromagnetic signal to leak into the leaky feeder along its (entire) length. In the present document, the term "slot" may also include slot groups. In an embodiment, the slots/slot groups may be, regularly or irregularly distributed along the length of the leaky feeder. Each slot may comprise a different shape. Multiple slots may function together as an array.

In the context of the present document, the term "direct reception of an electromagnetic signal" may in particular refer to reception of the electromagnetic signal by the receiver without reflecting it from a target. In other words, the electromagnetic signal to be received may be characterized as being directly received, in a non-reflected manner, (i.e. the incident signal).

In an embodiment, the leaky feeder is coupled/connected to at least one of a transmitter (unit) and a receiver (unit). Hereby, the leaky feeder may be configured to transmit the signal provided by the transmitter (unit) and/or to provide a received signal to the receiver (unit).

In the context of the present document, the term "processing unit" may in particular refer to any hardware and/or software suitable for determination of the distance based on the transmission (based on the direct reception of the electromagnetic signal). The processing unit may comprise one or more processors. In an example, the processing unit may be implemented as one or more processing devices in the clearance determination device or the wind turbine, respectively. In another example, the processing unit may be located (at least partially) outside of the wind turbine and operate remotely.

According to an exemplary embodiment, the invention may be based on the idea that a distance (clearance) between a tower and a blade of a wind turbine may be determined in an efficient and reliable manner, when the signal is received in a direct and free of signal reflection manner. For this purpose, a leaky feeder, which may function as a receiver and/or transmitter, is arranged at the tower or at the blade of the wind turbine. It has been found by the inventors that a leaky feeder may be especially advantageous for this purpose.

### Exemplary Embodiments

According to the invention the transmitter and the receiver are synchronized, in particular with a high-precision synchronization signal. This may ensure the integrity and accuracy of the transmitted and received signal. The synchronization of the transmitter and the receiver (and/or a processing unit) may be done for example via optical or electrical connection or wireless connection. In an example, the synchronization between transmitter and receiver is done via an optical fiber and/or another cable for synchronization. Synchronization of the transmitter and the receiver helps ensure that the transmitted signal and the received signal are precisely aligned in time. In addition, direct reception of the (reflection-free) electromagnetic signal allows for a simpler signal processing by the processing unit as fewer echoes occur. This can reduce computational requirements. I.e., A more accurate and precise clearance may be determined, potentially reducing computational requirements, by arranging the transmitter and the receiver in close proximity to each other (at the blade and the tower respectively), synchronizing them and using a (reflection-free) electromagnetic signal.

According to a further embodiment, the high-precision synchronization signal is based on at least one of: a satellite-based positioning system, a terrestrial broadcast signal, a mobile phone station signal. Examples of a satellite-based positioning system systems may be a global position system (GPS) pulse per second (PPS) or global navigation satellite system (GNSS, e.g. Galileo, Beidou, Glonass). In this manner, established and highly accurate technologies can be directly applied.

According to a further embodiment, the synchronization signals can be manmade telecommunication signals, for example terrestrial broadcast (e.g. DAB+, DVB-T2) or mobile phone station signals (e.g. GSM, 5G, LTE).

According to a further embodiment, the leaky feeder is at least partially located in the circumferential direction of the tower, in particular wound or bend around the tower, in particular inside or outside of the tower. Thereby, the leaky feeder may be bent (horizontally and/or vertically) around the whole tower or arranged at a specific height, in particular next to the blade tip, or on multiple heights of the tower. Thereby, the length extension and the flexibility of the leaky feeder may be exploited in an advantageous manner. When the leaky feeder is mounted outside of the tower, there may be a certain distance between the mounted leaky feeder and the tower. Said distance may be chosen so that the mechanical stability of the leaky feeder is ensured. The same may hold true, when the leaky feeder is mounted inside of the tower.

According to a further embodiment, the leaky feeder is configured as a lightning down conductor (to protect the wind turbine from a lightning strike). In this case, the leaky feeder may be arranged at the blade and/or at the tower of the wind turbine. The leaky feeder may me mounted inside or outside of the blade and/or the tower. This may provide the advantage that the leaky feeder may provide two advantages at the same time: serve as both, an efficient antenna and a robust lighting down conductor.

Lightning protection systems are generally applied to protect buildings and industrial constructions, such as wind turbines, from a lightning strike. In general, it may be said that a lighting protection system comprises a lightning conductor, e.g. implemented as a cable or rod, that guides the electric energy of the lighting towards ground, so that the construction to be protected is not harmed by the lighting strike. By using a leaky feeder (antenna) as a lightning down conductor, costs and efforts may be saved. Hereby, the elongation of the leaky feeder may be positively exploited.

According to a further embodiment, the wind turbine further comprises a lightning down conductor, wherein the leaky feeder and the lightning down conductor are associated with each other, in particular arranged in parallel to each other. In this context the term "associated" may in particular refer to any interaction between the leaky feeder and the lightning down conductor. For example, the leaky feeder and the lightning down conductor may be coupled in one device. In this case, the interaction between the leaky feeder and the lightening down conductor may allow a more efficient protection of the wind turbine from a lightning strike.

According to a further embodiment, the leaky feeder is configured as a leaky coaxial cable or a leaky waveguide (in particular in case of high frequencies). In this matter, the leaky feeder may have different configurations depending on the desired application.

According to a further embodiment, the blade comprises a blade root and a blade tip and the leaky feeder is arranged at the blade root or at the blade tip. The arrangement of the leaky at the blade root may provide the advantage of easy access for maintenance and replacement. The arrangement of the leaky at the blade tip may be advantageous as it allows to more precisely determine the distance between the tower and the blade tip being a part of the blade, which is prone to bend or swing e.g. under heavy wind loads (turbulences), changing pitch angle, or movement of the nacelle.

According to a further embodiment, the leaky feeder is arranged in a direction of main extension of the blade (in particular, the blade comprises one direction of main extension, which is significantly larger than the extensions in the other two space directions), in particular between the blade root and the blade tip. This may provide the advantage that the long extension of the leaky feeder allows a more efficient transmission and/or reception of signals. Furthermore, in case of a lightning down conductor application, the protection of the wind turbine from a lightning strike may be further improved.

According to a further embodiment, a leaky feeder can be configured for both, transmission and reception, i.e. a transceiver.

According to a further embodiment, the wind turbine further comprises at least two blades and the transmitter is configured to transmit a first electromagnetic signal associated with one blade and a second electromagnetic signal associated with the other blade. In this context, the term "electromagnetic signal associated with a specific blade" may in particular refer to a specific characteristic of the electromagnetic signal with respect to each specific blade. These characteristics may include, but is not restricted to, a carrier frequency. Other characteristics may include amplitude, phase, frequency, modulation scheme, etc.

According to a further embodiment, the first electromagnetic signal and the second electromagnetic signal comprise different carrier frequencies. In this manner, the blades may be efficiently distinguished. In a preferred embodiment, each blade may be associated with a different carrier frequency.

In a specific example, the receiver is allowed to trigger and demodulate (downmix) the correct signal from the respective blade. Thus, the demodulation frequency may be adapted to the blade transmitter carrier frequency.

Alternative demodulation schemes are also possible. For example, a broader frequency sweep may be used to demodulate and to cover all three transmitting carrier frequencies from the blades in only one receiver demodulation (wider IF range).

According to a further embodiment, the receiver is configured to identify one blade based on the first electromagnetic signal and identify the other blade based on the second electromagnetic signal. This may provide the advantage that the receiver can directly identify the specific blade and in particular extract the specific Doppler shift information related to the said specific blade. Thus, the distance between the tower and the specific blade may be precisely determined, which may be especially advantageous, because each blade can have specific characteristics such as blade deformation, pitch angle, and dynamic behavior.

According to a further embodiment, the method further comprises transmitting electromagnetic signals with different carrier frequencies with respect to each blade (see above).

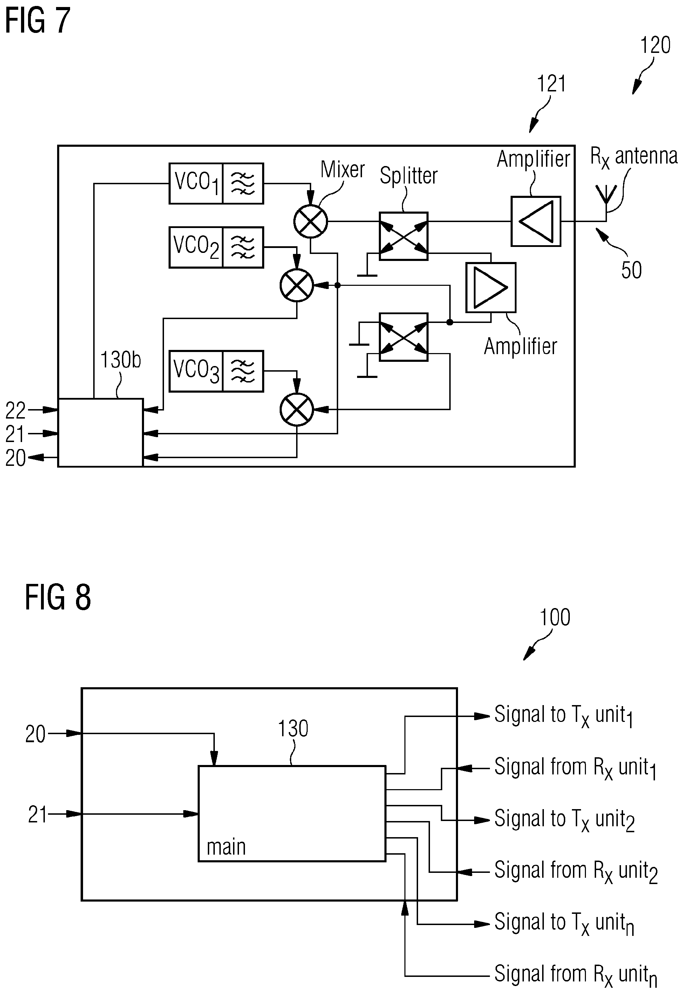

According to a further embodiment, the wind turbine (clearance determination device) comprises a central unit for controlling multiple receiver(s) and/or transmitter(s). An exemplary embodiment is described for Figure 8.

According to an exemplary embodiment, due to the fact, that only one transmitting path (way) from the blade to the tower may exist, the Doppler shift can be simplified to the one way Doppler Shift. At other radar applications the Doppler shift is generated by the outgoing electromagnetic wave and the reflected electromagnetic wave. State of the art radar applications on wind turbines may use the two way Doppler effect. In contrast to this, in the present case the wave is transmitted AND reflected. Thus, the electromagnetic wave travels both ways.

The aspects defined above, and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 illustrates a side view of a wind turbine with a clearance determination device in accordance with an exemplary embodiment of the present invention.
Figure 2 illustrates a leaky feeder in accordance with an exemplary embodiment of the present invention.
Figure 3 illustrates a side view of a wind turbine with a clearance determination device in accordance with an exemplary embodiment of the present invention.
Figure 4 illustrates a front view of a blade of a wind turbine in accordance with an exemplary embodiment of the present invention.
Figure 5 illustrates a transmitter in accordance with an exemplary embodiment of the present invention.
Figure 6 illustrates a receiver in accordance with an exemplary embodiment of the present invention.
Figure 7 illustrates a modified receiver in accordance with an exemplary embodiment of the present invention.
Figure 8 illustrates a processing unit in accordance with an exemplary embodiment of the present invention.

### Detailed Description of the Drawings

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously all such spatially relative terms refer to the orientation shown in the figures only for ease of description and are not necessarily limiting as an apparatus according to an embodiment of the invention can assume orientations different than those illustrated in the figures when in use.

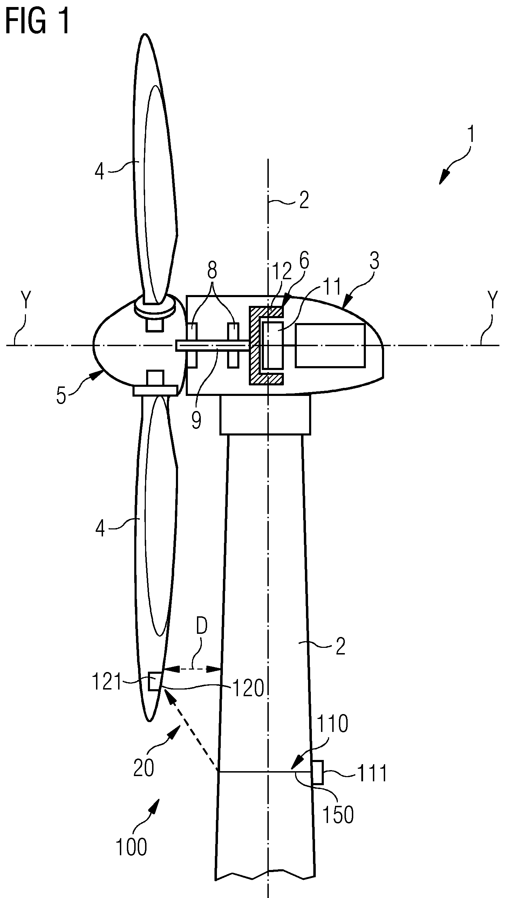

**Figure 1** illustrates a wind turbine 1 with a clearance determination device 100 in accordance with an exemplary embodiment of the present invention. The wind turbine 1 comprises a tower 2, which is mounted on a non-depicted fundament. A nacelle 3 is arranged on top of the tower 2. In between the tower 2 and the nacelle 3, a yaw angle adjustment device (not shown) is provided, which is capable of rotating the nacelle around a vertical yaw axis Z.

The wind turbine 1 further comprises a wind rotor 5 having one or more rotational blades 4 (in the perspective of Figure 1 only two blades 4 are visible). The blades 4 comprise a blade root 4a and a blade tip 4b. The wind rotor 5 is rotatable around a rotational axis Y. A distance D defined the clearance between the tower 2 and the blade 4. In general, when not differently specified, the terms axial, radial and circumferential in the following are made with reference0 to the rotational axis Y.

The blades 4 extend radially with respect to the rotational axis Y. The wind turbine 1 comprises an electric generator 6 having a stator 11 and a rotor 12. The rotor 12 is rotatable with respect to the stator 11 about the rotational axis Y to generate electrical power. The electric generator 6 and the generation of electrical power through the present invention is not a specific object of the present invention and therefore not described in further detail.

The wind turbine 1 is further provided with the clearance determination device 100 comprising a transmitter 10 that includes a leaky feeder 150 connected to a transmitting unit 110. The leaky feeder 150 is arranged circumferentially around the tower 2. The clearance determination device 100 further comprises a receiver 120 placed at the blade tip 4b. In this example, the receiver 120 comprises a receiving unit 121 and an antenna (not shown in detail). It can be further seen that the leaky feeder 150 acts as a transmitting antenna that transmits an electromagnetic signal 20 directly to the receiver 120 at the blade 4, so that the incident signal 120 is received (without a reflection) at the receiver 120.

**Figure 2** illustrates a leaky feeder 150 in accordance with an exemplary embodiment of the present invention. In this example, the leaky feeder 150 is configured as a leaky coaxial cable. The center of the leaky feeder is a conductor 155, e.g. a copper cable/wire. The conductor 155 is embedded (encapsulated) in a dielectric material layer 154. Further, around the dielectric material layer 154, there is arranged a shielding layer (outer conductor) 152, e.g. a metal/copper layer. A plurality of slots (apertures) 153 (in this embodiment 7 slots are shown) is formed in said shielding layer 152. Thereby, it is enabled to transmit/receive electromagnetic signal along the length of the leaky feeder 150. Since the transmission/reception takes (essentially) only place at the slots, it is termed "leaking". Optionally, a protection layer (cable jacket), in particular a dielectric such as rubber material, more in particular with low optical coverage, can be arranged around the shielding layer 152. The slots 153 are located with predefined positions and distances between each other. The position, number and shape of the slots can vary along the entire length of the leaky feeder.

**Figure 3** illustrates a wind turbine 1 in accordance with an exemplary embodiment of the invention. The wind turbine 1 is comparable to the one shown in Figure 1, comprising a clearance determination device 100. In contrast to the example of Figure 1, the transmitter 110 is arranged at the blade tip 4b of the blade 4 and the receiver 120 is arranged at the tower 2. The transmitter 110 comprises the leaky feeder 150 at the blade connected to the transmitting unit (not shown here). In this example, the leaky feeder 150 can be arranged circumferentially around the blade 4 or can be arranged within the blade.

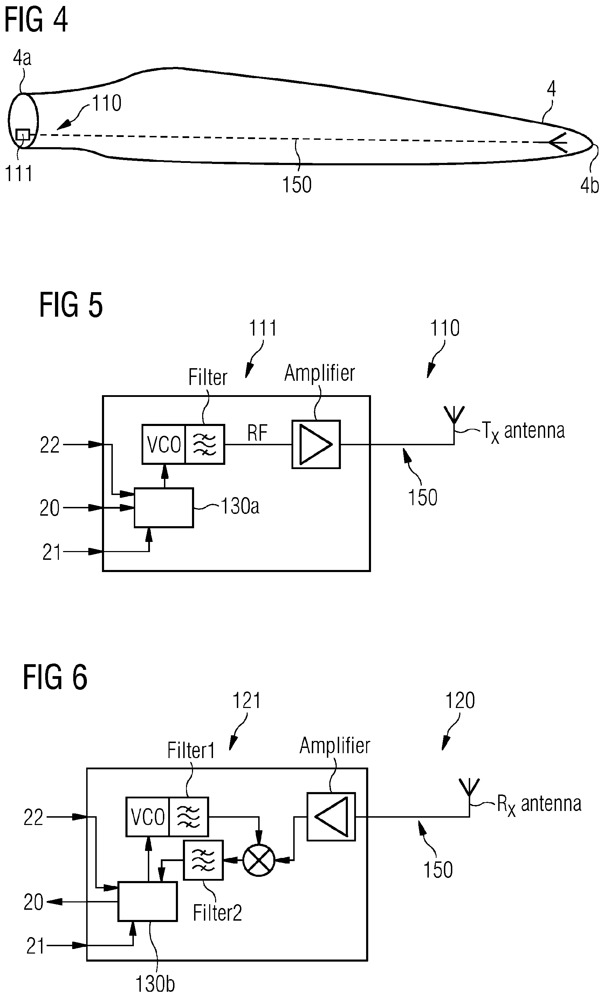

**Figure 4** shows a blade 4 of a wind turbine 1 in accordance with an exemplary embodiment of the present invention. A transmitting unit 111 is arranged at a blade root 4a of the blade 4 and is connected to a leaky feeder 150. The transmitting unit 111 and the leaky feeder 150 hereby form together the transmitter 110. The leaky feeder 150 extends in a direction of main extension of the blade 4 between the blade root 4a and the blade tip 4b. In this manner, the leaky feeder 150 serves as both, a transmitter 110 (transmitting antenna) and lighting down conductor to protect the blade 4 from a lightning strike.

**Figure 5** shows a transmitter 110 comprising a transmitting unit 111 and a leaky feeder 150, which serves as a transmitting antenna (Tx), according to an exemplary embodiment of the present invention. The transmitting unit 111 comprises a local processor 130a fed by a power supply 22, an electromagnetic signal 20 (e.g. from a processing device 130) to be transmitted, and a synchronization signal 21. The transmitting unit 111 controls a voltage controlled oscillator, which generates a variable high frequency source. In this example, the generated high frequency signal is modulated, and the transmitting unit 111 is provided with a frequency filter in order to filter unnecessary frequency components. The modulated signals are then fed into a power amplifier and are then provided to the leaky feeder 150 to be transmitted.

**Figure 6** shows a receiver 120 comprising a receiving unit 121 and a leaky feeder 150, serving as the receiving antenna (Rx), according to another exemplary embodiment of the present invention. The leaky feeder 150directly receives an incident electromagnetic signal 20 transmitted by the transmitter 110. In this example, the receiving unit 121 further comprises a local processor 130b which controls VCO (see above), a frequency filter, an amplifier, and a mixer. The received electromagnetic signal is amplified by the amplifier and then mixed by the mixer using downmixing (or upmixing) algorithms in order to eliminate the basic transmitting frequency.

In a specific example, a mixed signal with removed carrier frequency contains the Doppler information generated by a relative radial movement of the blade 4 in the direction towards and away from the tower 2.

The analysis of the Doppler shift may depend on the exact application. An example for a suitable application could be application of a FMCW (frequency-modulated continuous wave) radar, but other applications are suitable as well. The carriers of the transmitter units will be modulated with a continuous wave. The carriers at the receiver will be than mixed with the modulated carrier at the receiving unit to extract the Doppler information.

The receiving unit 121 further comprises an additional optional filter in order to remove noise, which could impact the received electromagnetic signal quality. The downmixed signal is then digitalized by an Analog to Digital Converter, ADC.

The transmitter 110 and the receiver 120 are synchronized with a high-precision synchronization signal. This signal could be a 1 PPS (pulse per second) signal based and synchronized on global position system (GPS) or on another satellite-based positioning system (e.g. GNSS: Galileo, Beidou, Glonass).

Like the transmitting unit 111 described above, the receiving unit 121 is fed by a power supply 22 and a synchronization signal 21. In contrast to the transmitting unit 111, the receiving unit 121 provides the received (and processed) signal 20 further, e.g. to a processing unit 130.

**Figure 7** illustrates a more advanced example of the receiving unit 121 of Figure 6 according to another exemplary embodiment of the present invention. The receiving unit 121 comprises a local processor 130b, a plurality of voltage controlled oscillators, filters, mixers, and splitters in order to receive, split and process an incident electromagnetic signal in non-reflected manner.

For a better distinguishing of the transmitter carrier, different transmitter carrier frequencies for each of three blades 4 are used in this this specific example. Accordingly, the receiver 120 triggers and demodulates (downmix) the received signal 20 from the respective blade 4. This could be done by adding the hub position angle to the processing unit 130. After processing the signal 20 is forwarded to the receiving unit 120, which adapts the voltage controlled oscillator to the actual needed carrier frequency of the next "incoming" blade. As an alternative to the described process, the signal 20 can be split from the receiving antenna into a plurality of parts depending on the number of blades 4 (here 3 paths for three blades). Each of split signals 20 are downmixed with its own mixer and VCO.

**Figure 8** illustrates a processing unit 130 according to an exemplary embodiment of the present invention. The processing unit 130 configured as a stand-alone unit in this example, but can also be combined into one of the other units. The processing unit 130 provides an electromagnetic signal 20 to at least one transmitter 110 and receives an electromagnetic signal from at least one receiver 120. Based on the transmission of the electromagnetic signal 20 (by the transmitter 110) and the direct reception of the incident electromagnetic signal 20 (at the receiver 120), the processing unit 130 determines the distance D between a tower 2 and a blade 4 of a wind turbine 1. Also the processing unit 130 can be fed by the synchronization signal 21. In the example shown, the processing unit provides signals to be transmitted to a plurality of transmitting units 111 and obtains received signals 20 from a plurality of receiving units 121.

It should be noted that the term "comprising" does not exclude other elements or steps, and the use of the item "a" does not exclude multiplicity. Elements described in conjunction with various embodiments can also be combined. It should also be noted that reference signs in the claims should not be interpreted as limiting the scope of the claims.

Independent of the grammatical term usage, individuals with male, female or other gender identities are included within the term.

## Claims

1. A wind turbine (1) comprising:
a tower (2);
a nacelle (3) coupled to the tower (2);
a wind rotor (5) arranged at the nacelle (3), and comprising at least one blade (4); and
a clearance determination device (100) to determine a distance (D) between the tower (2) and the at least one blade (4), the clearance measuring device (100) comprising:
a transmitter (110) configured to transmit an electromagnetic signal (20),
a receiver (120) configured to directly receive the signal (23) transmitted by the transmitter (110), and
a processing unit (130) configured to determine the distance (D) based on the transmission and the direct
reception of the electromagnetic signal (20);
wherein one of the transmitter (110) and the receiver (120) is arranged at the blade (4) and the other one is arranged at the tower (2),
wherein the transmitter (110) and/or the receiver (120) comprises a leaky feeder (150), and
wherein the transmitter (110) and the receiver (120) are synchronized.

2. The wind turbine (1) according to claim 1,
wherein the transmitter (110) and the receiver (120) are synchronized with a high-precision synchronization signal (21).

3. The wind turbine (1) according to claim 2,
wherein the high-precision synchronization signal (21) is based on at least one of: a satellite-based positioning system, in particular on a global position system, GPS, a terrestrial broadcast signal, a mobile phone station signal.

4. The wind turbine (1) according to one of the claims 1 to 3, wherein the leaky feeder (150) is at least partially located in the circumferential direction of the tower (2), in particular bend inside or outside of the tower (2).

5. The wind turbine (1) according to any one of the claims 1 to 4, wherein the leaky feeder (150) is configured as a lightning down conductor.

6. The wind turbine (1) according to any one of the claims 1 to 4, the wind turbine (1) further comprising:
a lightning down conductor,
wherein the leaky feeder (150) and the lightning down conductor are associated with each other, in particular arranged in parallel to each other.

7. The wind turbine (1) according to any one of the claims 1 to 6, wherein the leaky feeder (150) is configured as a leaky coaxial cable or a leaky waveguide.

8. The wind turbine (1) according to any one of the claims 1 to 7, wherein the blade (4) comprises a blade root (4a) and a blade tip (4b) and the leaky feeder (150) is arranged at the blade root (4a) or at the blade tip (4b).

9. The wind turbine (1) according to any one of the claims 1 to 7, wherein the blade (4) comprises a blade root (4a) and a blade tip (4b) and the leaky feeder (150) is arranged in a direction of main extension of the blade (4), in particular between the blade root (4a) and the blade tip (4b).

10. The wind turbine (1) according to any one of the claims 1 to 9, the wind turbine (1) comprises:
at least two blades (4); and
wherein the transmitter (110) is configured to transmit a first electromagnetic signal (20) associated with one blade (4) and a second electromagnetic signal associated with the other blade (4).

11. The wind turbine (1) according to claim 10,
wherein the first electromagnetic signal (20) and the second electromagnetic signal comprise different carrier frequencies.

12. The wind turbine (1) according to claim 10 or 11, wherein the receiver (120) is configured to identify one blade (4) based on the first electromagnetic signal (20) and identify the other blade (4) based on the second electromagnetic signal.

13. A method of determining a distance between a tower (2) and a blade (4) of a wind turbine (1), the method comprising:
transmitting an electromagnetic signal (20);
directly receiving an incident electromagnetic signal (20);
determining the distance between the tower (2) and the blade (4) based on the transmitting and direct receiving of the incident electromagnetic signal (20); and
synchronizing the transmitter (110) and the receiver (120);
wherein the transmitting and/or the receiving comprises use of a leaky feeder (150).

14. The method according to claim 13,
wherein the wind turbine (1) comprises at least two blades (4), the method further comprising:
transmitting electromagnetic signals (20) with different carrier frequencies with respect to each blade (4).

## Patentansprüche

1. Windturbine (1), umfassend:
einen Turm (2);
eine Gondel (3), die an den Turm (2) gekoppelt ist;
einen Windrotor (5), der an der Gondel (3) angeordnet ist und mindestens eine Schaufel (4) umfasst; und
eine Abstandsbestimmungsvorrichtung (100), um einen Abstand (D) zwischen dem Turm (2) und der mindestens einen Schaufel (4) zu bestimmen, wobei die Abstandsmessvorrichtung (100) Folgendes umfasst:
einen Überträger (110), der dazu konfiguriert ist, ein elektromagnetisches Signal (20) zu übertragen,
einen Empfänger (120), der dazu konfiguriert ist, das Signal (23), das durch den Überträger (110) übertragen wird, unmittelbar zu empfangen, und
eine Verarbeitungseinheit (130), die dazu konfiguriert ist, den Abstand (D) basierend auf der Übertragung und dem unmittelbaren Empfang des elektromagnetischen Signals (20) zu bestimmen;
wobei einer des Überträgers (110) und des Empfängers (120) an der Schaufel (4) angeordnet ist und der andere an dem Turm (2) angeordnet ist,
wobei der Überträger (110) und/oder der Empfänger (120) eine Leckleitung (150) umfassen und
wobei der Überträger (110) und der Empfänger (120) synchronisiert sind.

2. Windturbine (1) nach Anspruch 1,
wobei der Überträger (110) und der Empfänger (120) mit einem hochpräzisen Synchronisationssignal (21) synchronisiert sind.

3. Windturbine (1) nach Anspruch 2,
wobei das hochpräzise Synchronisationssignal (21) auf mindestens einem von Folgendem basiert: einem satellitengestützten Positionsbestimmungssystem, insbesondere auf einem globalen Positionssystem, GPS, einem terrestrischen Rundfunksignal, einem Mobiltelefonstationssignal.

4. Windturbine (1) nach einem der Ansprüche 1 bis 3, wobei sich die Leckleitung (150) mindestens teilweise in der Umfangsrichtung des Turmes (2) befindet, insbesondere innerhalb oder außerhalb des Turmes (2) biegen.

5. Windturbine (1) nach einem der Ansprüche 1 bis 4, wobei die Leckleitung (150) als ein Blitzableiter konfiguriert ist.

6. Windturbine (1) nach einem der Ansprüche 1 bis 4, wobei die Windturbine (1) ferner Folgendes umfasst:
einen Blitzableiter,
wobei die Leckleitung (150) und der Blitzableiter einander zugeordnet sind, insbesondere parallel zueinander angeordnet sind.

7. Windturbine (1) nach einem der Ansprüche 1 bis 6, wobei die Leckleitung (150) als ein koaxiales Leckkabel oder ein Leckwellenleiter konfiguriert ist.

8. Windturbine (1) nach einem der Ansprüche 1 bis 7, wobei die Schaufel (4) einen Schaufelfuß (4a) und eine Schaufelspitze (4b) umfasst und die Leckleitung (150) an dem Schaufelfuß (4a) oder an der Schaufelspitze (4b) angeordnet ist.

9. Windturbine (1) nach einem der Ansprüche 1 bis 7, wobei die Schaufel (4) einen Schaufelfuß (4a) und eine Schaufelspitze (4b) umfasst und die Leckleitung (150) in einer Richtung einer Haupterstreckung der Schaufel (4), insbesondere zwischen dem Schaufelfuß (4a) und der Schaufelspitze (4b), angeordnet ist.

10. Windturbine (1) nach einem der Ansprüche 1 bis 9, wobei die Windturbine (1) Folgendes umfasst:
mindestens zwei Schaufeln (4); und
wobei der Überträger (110) dazu konfiguriert ist, ein erstes elektromagnetisches Signal (20), das einer Schaufel (4) zugeordnet ist, und ein zweites elektromagnetisches Signal, das der anderen Schaufel (4) zugeordnet ist, zu übertragen.

11. Windturbine (1) nach Anspruch 10,
wobei das erste elektromagnetische Signal (20) und das zweite elektromagnetische Signal unterschiedliche Trägerfrequenzen umfassen.

12. Windturbine (1) nach Anspruch 10 oder 11,
wobei der Empfänger (120) dazu konfiguriert ist, eine Schaufel (4) basierend auf dem ersten elektromagnetischen Signal (20) zu identifizieren und die andere Schaufel (4) basierend auf dem zweiten elektromagnetischen Signal zu identifizieren.

13. Verfahren zum Bestimmen einer Entfernung zwischen einem Turm (2) und einer Schaufel (4) einer Windturbine (1), wobei das Verfahren Folgendes umfasst:
Übertragen eines elektromagnetischen Signals (20);
unmittelbares Empfangen eines eintreffenden elektromagnetischen Signals (20);
Bestimmen der Entfernung zwischen dem Turm (2) und der Schaufel (4) basierend auf dem Übertragen und dem unmittelbaren Empfangen des eintreffenden elektromagnetischen Signals (20); und
Synchronisieren des Überträgers (110) und des Empfängers (120);
wobei das Übertragen und/oder das Empfangen eine Verwendung einer Leckleitung (150) umfassen.

14. Verfahren nach Anspruch 13,
wobei die Windturbine (1) mindestens zwei Schaufeln (4) umfasst, wobei das Verfahren ferner Folgendes umfasst:
Übertragen elektromagnetischer Signale (20) mit unterschiedlichen Trägerfrequenzen in Bezug auf jede Schaufel (4).

## Revendications

1. Éolienne (1) comprenant :
une tour (2) ;
une nacelle (3) couplée à la tour (2) ;
un rotor éolien (5) agencé au niveau de la nacelle (3), et comprenant au moins une pale (4) ; et
un dispositif de détermination de jeu (100) pour déterminer une distance (D) entre la tour (2) et l'au moins une pale (4), le dispositif de mesure de jeu (100) comprenant :
la transmission, par un émetteur (110), d'un signal électromagnétique (20),
la réception directe, par un récepteur (120), du signal (23) transmis par l'émetteur (110), et
la détermination, par une unité de traitement (130), de la distance (D) sur la base de la transmission et de la réception directe du signal électromagnétique (20) ;
dans laquelle l'un de l'émetteur (110) et du récepteur (120) est agencé au niveau de la pale (4) et l'autre est agencé au niveau de la tour (2),
dans laquelle l'émetteur (110) et/ou le récepteur (120) comprend un câble à fuite (150), et
dans laquelle l'émetteur (110) et le récepteur (120) sont synchronisés.

2. Éolienne (1) selon la revendication 1,
dans laquelle l'émetteur (110) et le récepteur (120) sont synchronisés avec un signal de synchronisation de haute précision (21).

3. Éolienne (1) selon la revendication 2,
dans laquelle le signal de synchronisation de haute précision (21) est basé sur au moins l'un parmi : un système de positionnement par satellite, en particulier sur un système de positionnement global, GPS, un signal de diffusion terrestre, un signal de station de téléphonie mobile.

4. Éolienne (1) selon l'une des revendications 1 à 3, dans laquelle le câble à fuite (150) est au moins partiellement situé dans la direction circonférentielle de la tour (2), en particulier courbé à l'intérieur ou à l'extérieur de la tour (2).

5. Éolienne (1) selon l'une quelconque des revendications 1 à 4, dans laquelle le câble à fuite (150) est configuré comme un conducteur de descente de paratonnerre.

6. Éolienne (1) selon l'une quelconque des revendications 1 à 4, l'éolienne (1) comprenant en outre :
un conducteur de descente de paratonnerre,
dans laquelle le câble à fuite (150) et le conducteur de descente de paratonnerre sont associés l'un à l'autre, en particulier agencés parallèlement l'un à l'autre.

7. Éolienne (1) selon l'une quelconque des revendications 1 à 6, dans laquelle le câble à fuite (150) est configuré comme un câble coaxial à fuite ou un guide d'ondes à fuite.

8. Éolienne (1) selon l'une quelconque des revendications 1 à 7, dans laquelle la pale (4) comprend un pied de pale (4a) et une pointe de pale (4b) et le câble à fuite (150) est agencé au niveau du pied de pale (4a) ou au niveau de la pointe de pale (4b).

9. Éolienne (1) selon l'une quelconque des revendications 1 à 7, dans laquelle la pale (4) comprend un pied de pale (4a) et une pointe de pale (4b) et le câble à fuite (150) est agencé dans une direction d'extension principale de la pale (4), en particulier entre le pied de pale (4a) et la pointe de pale (4b).

10. Éolienne (1) selon l'une quelconque des revendications 1 à 9, l'éolienne (1) comprenant :
au moins deux pales (4) ; et
dans laquelle l'émetteur (110) est configuré pour réaliser la transmission d'un premier signal électromagnétique (20) associé à une pale (4) et d'un second signal électromagnétique associé à l'autre pale (4).

11. Éolienne (1) selon la revendication 10,
dans laquelle le premier signal électromagnétique (20) et le second signal électromagnétique comprennent des fréquences porteuses différentes.

12. Éolienne (1) selon la revendication 10 ou 11,
dans laquelle le récepteur (120) est configuré pour réaliser l'identification d'une pale (4) sur la base du premier signal électromagnétique (20) et l'identification de l'autre pale (4) sur la base du second signal électromagnétique.

13. Procédé pour réaliser la détermination d'une distance entre une tour (2) et une pale (4) d'une éolienne (1), le procédé comprenant les étapes consistant à :
réaliser la transmission d'un signal électromagnétique (20) ;
réaliser la réception directe d'un signal électromagnétique incident (20) ;
réaliser la détermination de la distance entre la tour (2) et la pale (4) sur la base de la transmission et de la réception directe du signal électromagnétique incident (20) ; et
réaliser la synchronisation de l'émetteur (110) et du récepteur (120) ;
dans lequel la transmission et/ou la réception comprend l'utilisation d'un câble à fuite (150).

14. Procédé selon la revendication 13,
dans lequel l'éolienne (1) comprend au moins deux pales (4), le procédé comprenant en outre l'étape consistant à :
réaliser la transmission de signaux électromagnétiques (20) avec des fréquences porteuses différentes par rapport à chaque pale (4).
